# FASCICULE DE BREVET EUROPEEN

(11) **EP 0 410 884 B1**
(45) Date de publication et mention de la délivrance du brevet: **26.10.1994**
(21) Numéro de dépôt: 90402142.5
(22) Date de dépôt: 25.07.1990
(51) Int. Cl.: F17C 1/14, F17C 1/16, B21D 51/24

(54) **Bouteille haute pression à parois métalliques minces renforcée par un bobinage à base de fibres de carbone, et procédé de fabrication**
Dünnwandige metallische Hochdruckflaschen durch eine Aufwicklung auf Kohlenstoffaserbasis verstärkt und Verfahren zur Herstellung
Metallic thin walled high pressure bottles reinforced with a carbon fibre based winding and process for manufacturing

(30) Priorité: 26.07.1989 FR 8910073
(43) Date de publication de la demande: 30.01.1991
(73) Titulaire: AEROSPATIALE Société Nationale Industrielle, 75781 Paris Cédex 16 (FR)
(72) Inventeur: Sabatie, Michelle, F-95270 Luzarches (FR); Lecoindre, Louis, F-18000 Bourges (FR)
(74) Mandataire: Rinuy, Santarelli

(56) Documents cités:
- DE-A- 1 601 250
- DE-B- 1 216 628
- FR-A- 2 238 544
- GB-A- 1 052 966

## Description

La présente invention concerne la fabrication de bouteilles haute pression constituées par une structure interne métallique (ou liner) renforcée par enroulement filamentaire de mèches de fibres de carbone imprégnées de résine thermoplastique ou thermodurcissable.

Dans la réalisation des bouteilles haute pression, différentes solutions existent actuellement :
1. Il y a tout d'abord des solutions entièrement métalliques mises en oeuvre par emboutissage, filage, ogivage, usinage notamment. Ces bouteilles sont en acier avec ou sans soudure ou en alliage léger de très forte épaisseur. Par exemple, pour un réservoir dont la pression de service est de 200 bars à 15°C, l'épaisseur de la partie cylindrique est de 9 à 10 mm pour les alliages d'aluminium avec une épaisseur pouvant aller jusqu'à 15 à 20 mm dans le fond et l'ogive du goulot. Il peut s'agir pour la même pression de service (200 bars à 15°C) d'un réservoir en alliage léger de plus faible épaisseur sur la partie cylindrique (Ex. = 5,5 à 6 mm) cette zone cylindrique étant alors frettée par un fil d'acier, mais conservant des épaisseurs de 15 à 20 mm dans les fonds et ogives de goulot.
   Ces solutions sont actuellement les plus courantes sur le marché des bouteilles haute pression. Elles présentent l'inconvénient d'être lourdes et dangereuses en cas de rupture intempestive, par exemple à la suite de problèmes de corrosion du métal.
2. Il y a par ailleurs des solutions comprenant une structure interne en alliage léger frettée dans sa partie cylindrique par bobinage d'une mèche de fibres de verre ou de fibres de polyaramide imprégnée de résine thermoplastique ou thermodurcissable.
   Ce deuxième type de solutions permet un gain de masse de l'ordre de 15 % par rapport à la solution totalement en alliage léger, mais ces bouteilles restent encore lourdes car les épaisseurs au niveau des fonds et des ogives de goulot restent importantes (par exemple l'épaisseur de la partie cylindrique métallique pourra descendre à 5,5 ou 6 mm, mais sera encore supérieure à 15 mm dans les autres zones pour une pression de service de 200 bars à 15°C). Ce type de solutions laisse d'autre part subsister un risque de rupture suivant une section, avec éjection dangereuse d'une ogive ou d'un fond, à la limite de la zone frettée.
3. D'autres solutions encore proposent une structure interne en alliage léger enrobée, sur toute la surface des zones ogivées du fond et du goulot en plus de la partie cylindrique, par enroulement filamentaire par une (ou des) mèche(s) de fibres de verre ou fibres de polyaramide imprégnées de résine thermosplastique ou thermodurcissable.
   Ce troisième type de solutions permet des gains de masse plus importants, de l'ordre de 40 % pour des pressions de service équivalentes par rapport à une solution totalement métallique en alliage léger, mais sont limitées par la tenue en cyclage demandée par la réglementation en vigueur. Celle-ci exige une tenue a 80.000 cycles entre 5 bars et la pression de service à 15°C, cette tenue étant assurée essentiellement par la structure interne métallique.

Plus précisément, on peut citer le document FR-A-2.238.544 concernant la fabrication d'un corps de révolution creux, tel que corps de réservoir, par façonnage d'une ébauche, par étirage sans formation de copeaux jusqu'à former un tube, puis par soudage soit à un fond, soit à un autre tube obtenu par étirage, en sorte de former un corps à un seul cordon de soudure. Le (ou les) tube(s) peuvent être munis d'un enroulement en matière plastique renforcée par des fibres ou d'un enroulement métallique. Les deux fonds peuvent eux aussi être munis d'un enroulement du type précité. Aucune précision n'est donnée quant à la disposition des fibres ou fils faisant partie du ou des enroulement(s). Il est à noter que l'accent est mis sur le souhait d'éviter tout usinage et sur le fait que le soudage se fait suivant des faces frontales (ce qui, outre les difficultés inhérentes à une telle orientation pour obtenir une soudure solide et étanche, fait courir le risque de débordement, voire d'échappement, de résidus de soudure).

Comme autres exemples, on peut citer le document GB-A-1.072.420 qui propose un réservoir formé de fibres imprégnées de résine, mais sans structure métallique interne, le document EP-A-0.191.655 qui concerne la réalisation par bobinage d'un récipient, ou le document US-A-3.508.677 qui concerne un récipient comprenant une structure interne thermoplastique renforcée par un simple bobinage circonférentiel.

La présente invention vise, pour des performances de tenue mécanique et de tenue à la corrosion comparables sinon améliorées, à obtenir un gain de masse encore plus important, sans risque de débordement de résidus de soudure.

L'invention propose à cet effet, un procédé de fabrication d'un réservoir destiné à contenir un gaz à haute pression, comportant une paroi cylindrique fermée en ses extrémités par une ogive de fond et une ogive à goulot, selon lequel on assemble une structure métallique interne comportant un tube cylindrique à paroi mince connecté à une calotte de fond et à une calotte à goulot, cet assemblage étant obtenu par soudage par faisceaux d'électrons d'extrémités appartenant respectivement au tube cylindrique à paroi mince et à l'une ou l'autre des calottes, cette structure métallique étant en un matériau soudable de haute résistance mécanique en traction et en fatigue et résistant à la corrosion, et on bobine sur l'ensemble de cette structure interne, par enroulements filamentaires, des fibres ou des rubans, caractérisé en ce que lesdites extrémités assemblées par soudage sont emboîtées et radialement superposées, lesdites fibres ou rubans, imprégnés, organisant une pluralité de strates, avec des angles d'enroulement par rapport à l'axe longitudinal du tube qui sont différents d'une strate à l'autre, l'ensemble constituant un renfort stratifié sur l'ensemble de la structure interne.

Selon des dispositions préférées éventuellement combinées :
- l'angle d'enroulement est compris entre 10° et 90°,
- le tube cylindrique de la structure métallique interne est obtenu par fluotournage,
- pour obtenir la structure interne, on prépare une ébauche en une seule pièce comportant un tube plus épais et plus court que le tube cylindrique final, solidaire de l'une des calottes, on amène par fluotournage ce tube à l'épaisseur et à la longueur visées pour le tube cylindrique, et on soude par faisceau d'électrons l'autre calotte à l'extrémité libre de cette ébauche fluotournée, cette autre calotte comportant un décrochement dans lequel pénètre l'extrémité libre de ce tube ;
- pour obtenir la structure interne, on prépare le tube cylindrique indépendamment des deux calottes par fluotournage d'un tube initialement plus court et plus épais, et on soude par faisceau d'électrons les deux calottes aux extrémités libres de ce tube cylindrique fluotourné, ces calottes comportant des décrochements dans lesquels pénètrent les extrémités de ce tube ;
- les calottes sont préparées par usinage et, après assemblage de la structure interne, on procède à un usinage fin du goulot de la calotte à goulot ;
- le matériau métallique constitutif de la structure interne est un acier inoxydable martensitique ou équivalent du point de vue résistance à la corrosion et permettant d'obtenir une résistance en traction à la rupture d'au moins 1000 MPa ;
- les rubans ou fibres du renfort stratifié sont imprégnés d'une résine thermodurcissable ou thermoplastique ;
- le matériau constituant le renfort stratifié est choisi dans le groupe constitué par les libres de carbone, de silicium, de bore, d'alumine ou analogue c'est-à-dire présentant une résistance en traction à la rupture supérieure à 2000 MPa et un module d'YOUNG supérieur à 200 GPa ;
Dans une version particulièrement préférée de ce procédé, on utilise :
- deux techniques nouvelles pour la constitution d'une structure métallique interne en acier inoxydable : le fluotournage, le soudage par faisceau d'électrons,
- des fibres de carbone pour la réalisation du renfort par enroulement filamentaire.

On appréciera que le choix d'un métal tel qu'un acier inoxydable va à l'encontre de la démarche de l'homme de métier qui cherchait plutôt à utiliser des métaux légers. Malgré sa densité élevée, l'acier inoxydable et ses équivalents, présentent l'avantage d'une bonne tenue mécanique, d'une bonne tenue à la corrosion ...

L'invention propose également un réservoir haute pression comportant une paroi cylindrique fermée à ses extrémités par une ogive de fond et une ogive à goulot, et comportant une structure métallique interne comportant un tube cylindrique à paroi mince connectée à une calotte de fond et a une calotte à goulot par au moins une zone d'assemblage comportant des extrémités soudées par faisceaux d'électrons, appartenant respectivement au tube cylindrique à paroi mince et à l'une ou l'autre des calottes, cette structure métallique étant en un matériau soudable de haute résistance mécanique en traction et en fatigue et résistant à la corrosion, et comportant autour de l'ensemble de cette structure métallique interne, un renfort formé de fibres ou de rubans, bobinés par enroulements filamentaires, caractérisé en ce que les extrémités soudées sont emboîtées, radialement superposées, et en ce que le renfort formé sur l'ensemble de la structure interne, est stratifié, les fibres ou rubans, imprégnés, organisant une pluralité de strates avec des angles d'enroulement, par rapport à l'axe longitudinal du tube, différents d'une strate à l'autre.

On appréciera que :
- les portions de tube sont emboîtées (et non soudées bout à bout) et soudées radialement de manière à ce que la soudure ne traverse pas les parois à souder, ceci afin d'éviter qu'à la longue des résidus de soudure se détachent et obstruent ainsi le conduit ;
- le bobinage des fibres ou rubans imprégnés selon des angles d'enroulement, par rapport à l'axe longitudinal du tube, différents d'une strate à l'autre (de 10 à 90 %) constitue le renfort stratifié. Ce type de bobinage interdit, en cas de surpression a l'intérieur de la bouteille, la cassure en deux parties de la bouteille. Au contraire, il permet une déchirure dans le sens longitudinal. Ainsi, il ne peut pas y avoir de projection de morceaux de la bouteille.

L'invention apparaîtra mieux à la lecture de la description qui va suivre, donnée à titre d'exemple purement illustratif et nullement limitatif, en référence aux dessins annexés dans lesquels :
- la figure 1 représente, avec un arrachement partiel, un réservoir à structure composite obtenu selon le procédé de l'invention ;
- la figure 2 est une vue en coupe axiale d'une préforme avant métallique utilisée selon ce procédé ;
- la figure 3 est une vue en coupe de cette préforme après fluotournage ;
- la figure 4 est une vue en coupe d'une préforme arrière métallique utilisée selon ce procédé ;
- la figure 5 est une vue en coupe de la structure interne métallique du réservoir après soudure des préformes des figures 3 et 4 : et
- la figure 6 est une vue en coupe d'une structure interne métallique obtenue selon une variante de réalisation comportant deux soudures.

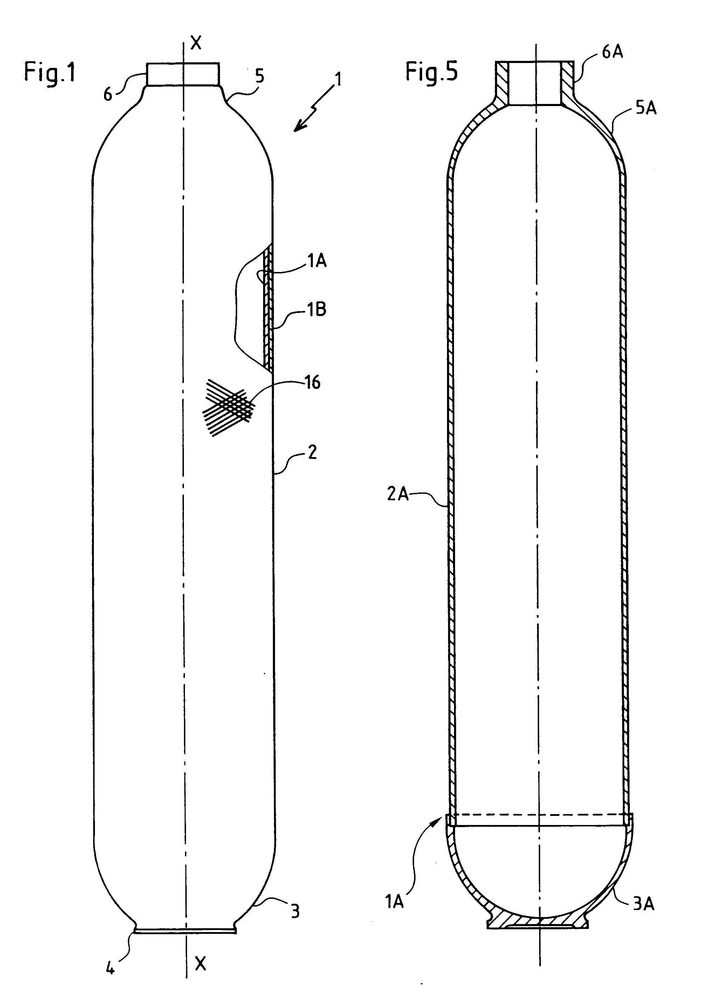

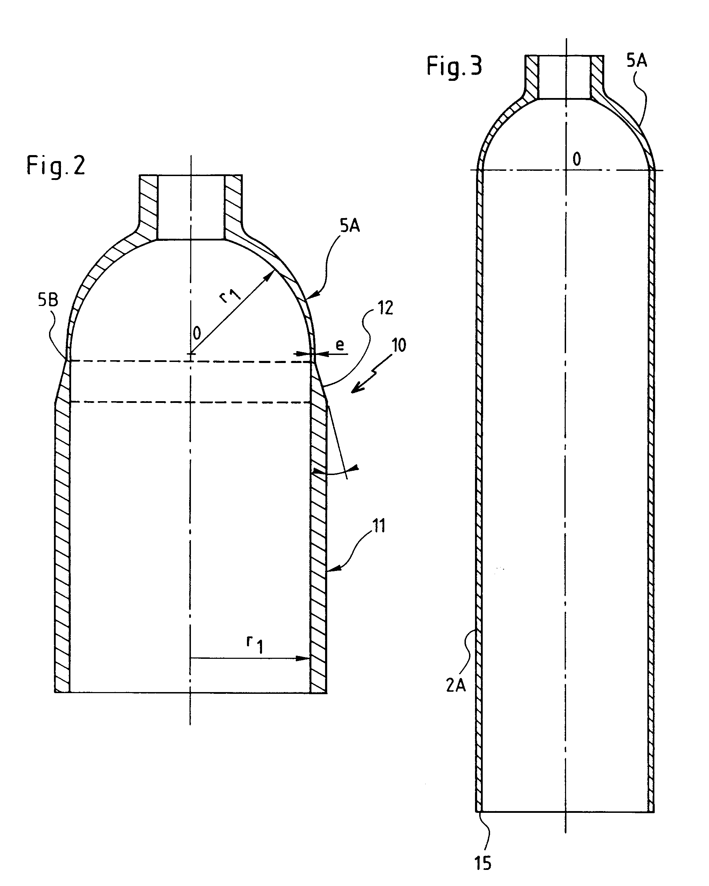

Ces figures 2 à 6 illustrent différentes étapes de réalisation d'un réservoir ou bouteille conforme à l'invention tel que représenté à la figure 1.

Ce réservoir 1, allongé suivant un axe longitudinal X-X comporte une paroi cylindrique 2 fermée à ses extrémités par une ogive de fond 3 munie d'une couronne 4 de stabilisation en configuration verticale, et par une ogive 5 munie d'un goulot 6.

Ce réservoir 1 est composite, étant constitué par une structure interne 1A dont l'ensemble est recouvert d un renfort stratifié 1B.

Cette structure interne 1A comporte un tube cylindrique 2A à paroi mince raccordé en ses extrémités à une calotte de fond 3A formant la partie interne de l'oqive de fond et à une calotte 5A munie d'un goulot 6A et formant la partie interne de l'ogive 5.

Ainsi qu'il ressort des figures 2 et 3, la calotte 5A a une épaisseur qui augmente depuis l'épaisseur finale e du tube cylindrique jusqu'à proximité du goulot 6A. Ici la surface de cette calotte est sphérique de rayon r₁ égal au rayon interne du tube cylindrique 2A tandis que sa surface extérieure définit, en toute coupe axiale, une courbe géodésique, c'est-à-dire telle que l'arc joignant deux points de cette courbe soit le plus court de tous les arcs de cette surface joignant ces deux points.

Cette calotte 5A fait initialement partie d'une ébauche ou préforme 10 élaborée par usinage qui, ainsi que cela apparaît à la figure 2, comporte en plus de cette calotte un tube 11 plus court et plus épais que le tube cylindrique 2A de la structure interne finie 1A. Ce tube épais a par exemple 2,5 fois l'épaisseur visée pour ce tube cylindrique final. Il est raccordé par un chanfrein extérieur 12 (ici à 15°) à une zone annulaire 5B de la calotte 5A qui est à l'épaisseur finale.

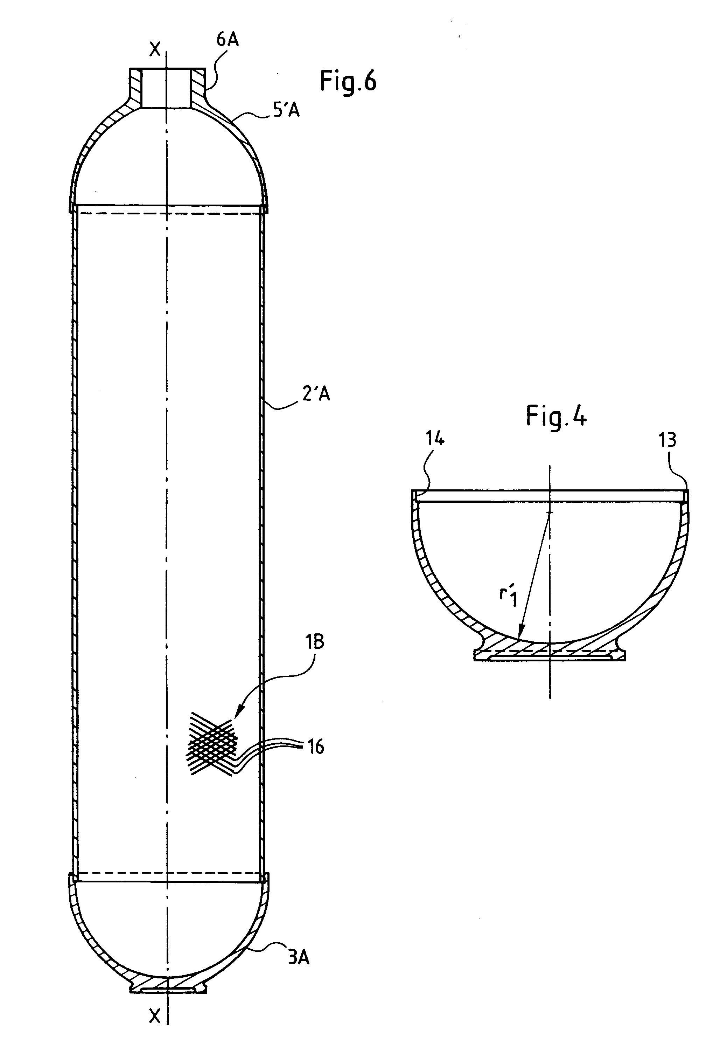

La calotte de fond 3A élaborée par usinage, telle que représentée à la figure 4, comporte de même une surface interne et une surface externe définies de façon équivalente à celles de la calotte 5A.

Elle présente une tranche annulaire libre 13 dans laquelle est ménagé un décrochement 14 dont la paroi cylindrique a un diamètre égal au diamètre extérieur final du tube cylindrique 2A, grâce à quoi l'extrémité libre 15 du tube de la figure 3 peut s'emboîter dans ce décrochement en vue de l'assemblage final de la structure interne, par soudure sous vide par faisceau d'électrons des extrémités 15 et 13 radialement superposées.

Ainsi que cela ressort des figures 1 et 6 où une portion du renfort stratifié 1B a été schématisée, ce renfort stratifié est formé d'une pluralité de couches constituée chacune d un ou plusieurs enroulements de mèches de fibres ou rubans 16 parallèles, noyés dans une matrice de liaison à base de résine thermodurcissable ou thermoplastique, avec des angles d'enroulement, définis par rapport à l'axe longitudinal du réservoir, qui varient d'une couche à l'autre. Dans l'exemple considéré on a représenté une couche de type longitudinal, c'est-à-dire formant un angle +Θ et -Θ par rapport à l'axe longitudinal de la bouteille.

L'angle d'enroulement est de préférence compris entre 10° et 90°, et le nombre de couches ou strates est couramment supérieur à deux ; l'épaisseur est déterminée en fonction de la tenue en pression exigée pour la bouteille.

Ce réservoir est élaboré selon les étapes suivantes :
a) réaliser la préforme 10 usinée,
b) réaliser la partie arrière 3A usinée,
c) fluotourner la partie cylindrique 11 de la préforme avant usinée 10,
d) souder par faisceau d'électrons (donc radialement) la tranche 13 de la partie arrière usinée sur le bord libre de la partie avant fluotournée. Dans certains cas, le procédé peut comporter une variante qui consiste à réaliser la partie avant en deux pièces : un tube fluotourné 2'A (ou usiné) sur lequel est soudé par faisceau d'électrons la partie avant 5'A proprement dite, (variante de la figure 6, où l'on observe que la tranche annulaire de la partie avant présente un décrochement dans lequel est emboîtée l'extrémité du tube 2'A),
e) terminer les usinages du goulot 6A,
f) réaliser par enroulement filamentaire la dépose d'une mèche de carbone 16 (ou d'un matériau offrant des caractéristiques au moins équivalentes) imprégnée de résine thermodurcissable ou thermoplastique,
g) procéder à la polymérisation du stratifié dans le cas d'une matrice thermodurcissable.

Le métal utilisé dans l'exemple présenté est de l'acier inoxydable martensitique de caractéristiques élevées (résistance en traction supérieure a 1.200 MPa) assurant une bonne tenue en fatigue même pour des épaisseurs faibles au niveau des ogives. On peut aussi utiliser d'autres matériaux métalliques qui seraient équivalents à l'acier, c'est-à-dire qui auraient des bonnes propriétés de tenue mécanique, résistance à la corrosion, soudabilité ; on peut utiliser ainsi les matériaux suivants : aciers inoxydables à durcissement structural, aciers inoxydables austénitiques.

Le procédé de mise en oeuvre par fluotournage permet d'obtenir la faible épaisseur visée pour la paroi de la partie cylindrique (soit environ 1 mm dans le cas illustré) et d'obtenir directement l'épaisseur finale désirée sans usinage. Malgré cette faible épaisseur, du fait de la structure métallurgique (écrouie) induite par le fluotournage, cette paroi a la résistance mécanique voulue.

Ceci donne au niveau de la structure interne acier un gain de masse de l'ordre de 30 % par rapport à une structure interne en alliage léger assurant la même tenue mécanique.

Le soudage sous vide et par faisceau d'électrons offre une qualité de soudure telle que la rupture de la pièce ne peut guère se faire dans cette zone.

De manière à obtenir un allègement optimum de la bouteille, le renfort bobiné est réalisé à partir d'une mèche de carbone ce qui assure un gain de 30 % par rapport à un stratifié équivalent obtenu par bobinage d'une mèche de verre. De plus, tout en étant très léger, le carbone est mieux adapté que le verre au bobinage sur acier, en particulier du point de vue module d'élasticité (coefficient multiplicatif de 3 par rapport au verre et de 2 par rapport à la fibre polyaramide).

Les choix de la fibre ou ruban 16 et de la résine d'imprégnation sont fonction des caractéristiques mécaniques et thermiques désirées ; ainsi la résine epoxy alliée à la fibre de carbone haute résistance constitue le matériau le plus facilement adaptable à cette réalisation.

Ces fibres de carbone peuvent être remplacées par des fibres équivalentes (mêmes propriétés de faible masse volumique, de résistance en traction et de module), à savoir par exemple des fibres de carbure de silicium respectivement associées à des résines thermoplastiques PEEK (polyetherethercetone) - PEI (polyetherimide) - PPS (sulfure de polyphénylène) - thermodurcissables (Epoxydiques - polyester - polymide...).

L'empilement de couches bobinées avec différents angles de bobinage permet d'ajuster la tenue du réservoir de manière à obtenir, lors des tests à rupture, une ouverture en boutonnière suivant une génératrice, moins dangereuse qu'une rupture suivant une section diamétrale avec risque d'éjection d'éléments.

Lors des essais de cyclage, la rupture résulte du vieillissement de la structure interne métallique ; celle-ci fuit sans provoquer de rupture totale, le renfort stratifié conservant toute sa tenue, contrairement à ce qui peut se passer dans le cas d'un réservoir uniquement métallique.

A titre d'exemple, pour une pression de 300 bar à 15°C, la pression de rupture est supérieure à 900 bar. La longueur du réservoir est de 315 mm pour une longueur de 233 mm pour le tube cylindrique et pour un diamètre d'environ 60 mm. Le poids du réservoir ainsi obtenu est de 0,770 kg.

Il va de soi que la description qui précède n'a été-proposée qu'à titre d'exemple non limitatif et que de nombreuses variantes peuvent être proposées par l'homme de l'art sans sortir du cadre de l'invention. Ainsi notamment, à la différence de ce qui a été représenté, ce peut être la (ou les) calotte(s) qui est (sont) emboîtée(s) dans une (les) extrémité(s) du tube. En outre, la notion d'emboîtement n'implique pas nécessairement l'existence d'un décrochement dans l'épaisseur de l'extrémité du tube ou de l'une ou l'autre des calottes.

## Revendications

1. Procédé de fabrication d'un réservoir (1) destiné à contenir un gaz à haute pression, comportant une paroi cylindrique fermée (2) en ses extrémités par une ogive de fond (3) et une ogive à goulot, selon lequel on assemble une structure métallique interne (1A) comportant un tube cylindrique à paroi mince (2A, 2'A) connecté à une calotte de fond (3A) et à une calotte (5A) à goulot (6A), cet assemblage étant obtenu par soudage par faisceaux d'électrons d'extrémités (13, 15) appartenant respectivement au tube cylindrique à paroi mince et à l'une ou l'autre des calottes, cette structure métallique étant en un matériau soudable de haute résistance mécanique en traction et en fatigue et résistant à la corrosion, et on bobine sur l'ensemble de cette structure interne, par enroulements filamentaires, des fibres ou des rubans, caractérisé en ce que lesdites extrémités (13, 15) assemblées par soudage sont emboîtées et radialement superposées, lesdites fibres ou rubans, imprégnés, organisant une pluralité de strates, avec des angles d'enroulement par rapport à l'axe longitudinal du tube qui sont différents d'une strate à l'autre, l ensemble constituant un renfort stratifié (1B) sur l'ensemble de la structure interne.

2. Procédé selon la revendication 1, caractérisé en ce que l'angle d'enroulement est compris entre 10° et 90°.

3. Procédé selon la revendication 1 ou la revendication 2, caractérisé en ce que le tube cylindrique (2A, 2'A) de la structure métallique interne est obtenu par fluotournage.

4. Procédé selon la revendication 3, caractérisé en ce que, pour obtenir la structure interne (2A), on prépare une ébauche (10) en une seule pièce comportant un tube (11) plus épais et plus court que le tube cylindrique final, solidaire de l'une (5A) des calottes, on amène par fluotournage ce tube à l'épaisseur et à la longueur visées pour le tube cylindrique, et on soude par faisceau d'électrons l'autre calotte (3A) à l'extrémité libre de cette ébauche fluotournée, cette autre calotte comportant un décrochement (14) dans lequel pénètre l'extrémité libre de ce tube.

5. Procédé selon la revendication 4, caractérisé en ce que l'ébauche comporte la calotte à goulot.

6. Procédé selon la revendication 3, caractérisé en ce que, pour obtenir la structure interne (2'A), on prépare le tube cylindrique indépendamment des deux calottes par fluotournage d'un tube initialement plus court et plus épais, et on soude par faisceau d'électrons les deux calottes (5'A, 3A) aux extrémités libres de ce tube cylindrique fluotourné, ces calottes comportant des décrochements (14) dans lesquels pénètrent les extrémités de ce tube.

7. Procédé selon l'une quelconque des revendications 1 à 6, caractérisé en ce que les calottes sont préparées par usinage et, après assemblage de la structure interne, on procède a un usinage fin du goulot de la calotte à goulot.

8. Procédé selon l'une quelconque des revendications 1 à 7, caractérisé en ce que le matériau métallique constitutif de la structure interne est un acier martensitique inoxydable ou équivalent du point de vue résistance à la corrosion, soudabilité et résistance mécanique.

9. Procédé selon l'une quelconque des revendications 1 à 8, caractérisé en ce que les rubans ou fibres du renfort stratifié sont imprégnés d'une résine thermodurcissable ou thermoplastique.

10. Procédé selon l'une quelconque des revendications 1 à 9, caractérisé en ce que le matériau constituant le renfort stratifié est choisi dans le groupe constitué par les fibres de carbone, de silicium, de bore, d'alumine ou analogue.

11. Procédé selon l'une quelconque des revendications 1 à 7, caractérisé en ce que la structure interne étant en acier inoxydable, le renfort stratifié est obtenu par bobinage de fibres de carbone imprégnées d'une résine epoxy.

12. Réservoir haute pression (1) comportant une paroi cylindrique (2) fermée à ses extrémités par une ogive de fond (3) et une ogive (5) à goulot (6), et comportant une structure métallique interne (1A) comportant un tube cylindrique (2A, 2'A) à paroi mince connectée à une calotte de fond (3A) et à une calotte (5A, 5'A) à goulot (6A) par au moins une zone d'assemblage comportant des extrémités (13, 15) soudées par faisceaux d'électrons, appartenant respectivement au tube cylindrique à paroi mince et à l'une ou l'autre des calottes, cette structure métallique étant en un matériau soudable de haute résistance mécanique en traction et en fatigue et résistant à la corrosion, et comportant autour de l'ensemble de cette structure métallique interne, un renfort (1B) formé de fibres ou de rubans, bobinés par enroulements filamentaires, caractérisé en ce que les extrémités soudées (13, 15) sont emboîtées, radialement superposées, et en ce que le renfort (1B) formé sur l'ensemble de la structure interne, est stratifié, les fibres ou rubans, imprégnés, organisant une pluralité de strates avec des angles d'enroulement, par rapport à l'axe longitudinal du tube, différents d'une strate à l'autre.

13. Réservoir selon la revendication 12, caractérisé en ce que l'angle d'enroulement est compris entre 10° et 90°.

14. Réservoir haute pression selon la revendication 12 ou la revendication 13, caractérisé en ce que le tube cylindrique métallique est dans un état écroui obtenu par fluotournage.

15. Réservoir haute pression selon l'une quelconque des revendications 12 à 14, caractérisé en ce que la structure interne comporte une pièce formant l'une (5A) des calottes et le tube cylindrique (2A), connectée à l'autre calotte (3A) par une zone de soudure par faisceau d'électrons comportant un décrochement ménagé dans cette autre calotte et dans lequel pénètre l'extrémité libre du tube.

16. Réservoir haute pression selon la revendication 15, caractérisé en ce que ladite pièce forme à la fois le tube cylindrique et la calotte à goulot.

17. Réservoir haute pression selon l'une quelconque des revendications 12 à 14, caractérisé en ce que le tube cylindrique est raccordé à chacune des calottes par une zone de soudure par faisceaux d'électrons, chacune de ces calottes comportant un décrochement dans lequel pénètre l'une des extrémités du tube.

18. Réservoir haute pression selon l'une quelconque des revendications 12 à 17, caractérisé en ce que le matériau métallique constitutif de la structure interne est un acier inoxydable martensitique ou équivalent du point de vue résistance à la corrosion.

19. Réservoir haute pression selon l'une quelconque des revendications 12 à 18, caractérisé en ce que les fibres ou rubans du renfort stratifié sont enrobés d'une matrice de liaison en résine thermodurcissable ou thermoplastique.

20. Réservoir haute pression selon l'une quelconque des revendications 12 à 19, caractérisé en ce que le matériau constituant le renfort stratifié est choisi dans le groupe constitué par les fibres de carbone, de silicium, de bore, d'alumine ou analogue.

21. Réservoir haute pression selon l'une quelconque des revendications 12 à 20, caractérisé en ce que la structure interne étant en acier inoxydable, le renfort stratifié est obtenu par bobinage de fibres de carbone imprégnées d'une résine epoxy.

## Claims

1. Process for manufacturing a vessel (1) intended to contain a gas at high pressure, having a cylindrical wall (2) closed at its ends by a bottom dome (3) and a dome with a neck, according to which an inner metal structure (1A) is assembled, comprising a cylindrical thin-walled tube (2A, 2'A) connected to a bottom cap (3A) and to a cap (5A) with a neck (6A), this assembly being achieved by the electron-beam welding of ends (13, 15) belonging respectively to the thin-walled cylindrical tube and to one or other of the caps, this metal structure being made from a weldable material with high mechanical tensile and fatigue strength and resistant to corrosion, and fibres or strips are wound on the whole of this inner structure in filament windings, characterised in that the said ends (13, 15) assembled by welding are fitted together and radially superimposed, the said fibres or strips, which are impregnated, forming a plurality of layers with winding angles, with respect to the longitudinal axis of the tube, which are different from one layer to the next, the whole constituting a layered reinforcement (1B) on the whole of the inner structure.

2. Process according to Claim 1, characterised in that the winding angle is between 10° and 90°.

3. Process according to Claim 1 or Claim 2, characterised in that the cylindrical tube (2A, 2'A) of the inner metal structure is obtained by flow turning.

4. Process according to Claim 3, characterised in that, in order to obtain the inner structure (2A), a single-piece blank (10) is prepared, comprising a tube (11) which is thicker and shorter than the final cylindrical tube and which is integral with one (5A) of the caps, this tube is brought by flow turning to the thickness and length sought for the cylindrical tube, and the other cap (3A) is welded by electron beam to the free end of this flow-turned blank, this other cap having a recess (14) into which the free end of this tube enters.

5. Process according to claim 4, characterised in that the blank includes the cap with a neck.

6. Process according to Claim 3, characterised in that, in order to obtain the inner structure (2'A), the cylindrical tube is prepared independently of the two caps by the flow turning of a tube which is initially shorter and thicker, and the two caps (5'A, 3A) are welded by electron beam to the free ends of this flow-turned cylindrical tube, these caps having recesses (14) into which the ends of this tube enter.

7. Process according to any one of Claims 1 to 6, characterised in that the caps are prepared by machining and, after assembly of the inner structure, the neck of the cap with a neck is fine-machined.

8. Process according to any one of Claims 1 to 7, characterised in that the metal material constituting the inner structure is a martensitic stainless steel or its equivalent from the point of view of corrosion resistance, weldability and mechanical strength.

9. Process according to any one of Claims 1 to 8, characterised in that the strips or fibres of the layered reinforcement are impregnated with a thermosetting or thermoplastic resin.

10. Process according to any one of Claims 1 to 9, characterised in that the material constituting the layered reinforcement is chosen from the group consisting of carbon, silicon, boron, alumina or similar fibres.

11. Process according to any one of Claims 1 to 7, characterised in that, the inner structure being made from stainless steel, the layered reinforcement is obtained by winding carbon fibres impregnated with an epoxy resin.

12. High-pressure vessel (1) having a cylindrical wall (2) closed at its ends by a bottom dome (3) and a dome (5) with a neck (6), and having an inner metal structure (1A) comprising a cylindrical thin-walled tube (2A, 2'A) connected to a bottom cap (3A) and to a cap (5A, 5'A) with a neck (6A) by at least one connection zone having ends (13, 15) welded by electron beams, belonging respectively to the thin-walled cylindrical tube and to one or other of the caps, this metal structure being made from a weldable material with high mechanical tensile and fatigue strength and resistant to corrosion and having, around the whole of this inner metal structure, a reinforcement (1B) formed by fibres or strips, wound in filament windings, characterised in that the welded ends (13, 15) are fitted together, radially superimposed, and in that the reinforcement (1B) formed on the whole of the inner structure is layered, the fibres or strips, which are impregnated, forming a plurality of layers with winding angles, with respect to the longitudinal axis of the tube, which are different from one layer to the next.

13. Vessel according to Claim 12, characterised in that the winding angle is between 10° and 90°.

14. High-pressure vessel according to Claim 12 or Claim 13, characterised in that the metal cylindrical tube is in a work-hardened state obtained by flow turning.

15. High-pressure vessel according to any one of Claims 12 to 14, characterised in that the inner structure includes a piece forming one (5A) of the caps and the cylindrical tube (2A), connected to the other cap (3A) by an electron-beam welding zone having a recess provided in this other cap and into which the free end of the tube enters.

16. High-pressure vessel according to Claim 15, characterised in that the said piece forms both the cylindrical tube and the cap with a neck.

17. High-pressure vessel according to any one of Claims 12 to 14, characterised in that the cylindrical tube is connected to each of the caps by an electron-beam welding zone, each of these caps having a recess into which one of the ends of the tube enters.

18. High-pressure vessel according to any one of Claims 12 to 17, characterised in that the metal material constituting the inner structure is a martensitic stainless steel or its equivalent from the point of view of corrosion resistance.

19. High-pressure vessel according to any one of Claims 12 to 18, characterised in that the fibres or strips of the layered reinforcement are coated with a connecting mesh of thermosetting or thermoplastic resin.

20. High-pressure vessel according to any one of Claims 12 to 19, characterised in that the material constituting the layered reinforcement is chosen form the group consisting of carbon, silicon, boron, alumina or similar fibres.

21. High-pressure vessel according to any one of Claims 12 to 20, characterised in that, the inner structure being made from stainless steel, the layered reinforcement is obtained by winding carbon fibres impregnated with an epoxy resin.

## Patentansprüche

1. Verfahren zur Herstellung eines Behälters (1), der dazu bestimmt ist, ein Gas mit hohem Druck zu enthalten, und eine zylindrische Wand (2) besitzt, die an ihren Enden durch eine Bodenogive (3) und eine Halsogive geschlossen ist, gemäß welchem man eine innere metallische Struktur (1A) zusammenfügt, die ein zylindrisches Rohr (2A, 2'A) mit dünner Wand aufweist, das mit einer Bodenkalotte (3A) und einer Kalotte (5A) mit Hals (6A) verbunden ist, wobei diese Zusammenfügung durch Elektronenstrahlschweißen von Enden (13, 15) erhalten wird, die zum zylindrischen Rohr mit dünner Wand bzw. zu der einen oder der anderen der Kalotten gehören, wobei diese metallische Struktur aus einem korrosionsbeständigen schweißbaren Werkstoff hoher mechanischer Zug- und Ermüdungsfestigkeit besteht, und man auf die Gesamtheit dieser inneren Struktur durch Faden- bzw. Faserwicklungen Fasern oder Bänder wickelt, dadurch gekennzeichnet, daß diese durch Verschweißen zusammengefügten Enden (13, 15) ineinandergesteckt und radial überlagert werden, wobei diese Fasern oder Bänder, die getränkt sind, eine Vielzahl von Schichten mit Wicklungswinkeln bezüglich der Längsachse des Rohrs, die von einer Schicht zur anderen verschieden sind, bilden, und das Ganze eine geschichtete Verstärkung (1B) auf der Gesamtheit der inneren Struktur bildet.

2. Verfahren nach Anspruch 1, durch gekennzeichnet, daß der Wicklungswinkel 10° bis 90° beträgt.

3. Verfahren nach Anspruch 1 oder Anspruch 2, dadurch gekennzeichnet, daß das zylindrische Rohr (2A, 2'A) der inneren metallischen Struktur durch Fließformen erhalten wird.

4. Verfahren nach Anspruch 3, dadurch gekennzeichnet, daß man zur Bildung der inneren Struktur (2A) einen einstückigen Rohling (10) herstellt, der ein Rohr (11) umfaßt, das dicker und kürzer als das fertige zylindrische Rohr ist und mit einer (5A) der Kalotten fest verbunden ist, man dieses Rohr durch Fließformen auf die für das zylindrische Rohr angestrebte Dicke und Länge bringt und man die andere Kalotte (3A) durch Elektronenstrahlschweißen am freien Ende dieses fließgeformten Rohlings anschweißt, wobei diese andere Kalotte einen Absatz (14) aufweist, in den das freie Ende dieses Rohr eintritt.

5. Verfahren nach Anspruch 4, durch gekennzeichnet, daß der Rohling die Halskalotte umfaßt.

6. Verfahren nach Anspruch 3, dadurch gekennzeichnet, daß man zur Bildung der inneren Struktur (2'A) das zylindrische Rohr unabhängig von den beiden Kalotten durch Fließformen eines ursprünglich kürzeren und dickeren Rohrs herstellt und man durch Elektronenstrahlschweißen die beiden Kalotten (5'A, 3A) an den freien Enden dieses fließgeformten zylindrischen Rohrs anschweißt, wobei diese Kalotten Absätze (14) aufweisen, in die die Enden dieses Rohrs eintreten.

7. Verfahren nach einem der Ansprüche 1 bis 6, dadurch gekennzeichnet, daß die Kalotten durch Bearbeitung hergestellt werden und man nach Zusammenfügen der inneren Struktur eine Feinbearbeitung des Halses der Halskalotte vornimmt.

8. Verfahren nach einem der Ansprüche 1 bis 7, dadurch gekennzeichnet, daß der die innere Struktur bildende metallische Werkstoff ein rostfreier martensitischer oder hinsichtlich Korrosionsbeständigkeit, Schweißbarkeit und mechanischer Festigkeit gleichwertiger Stahl ist.

9. Verfahren nach einem der Ansprüche 1 bis 8, dadurch gekennzeichnet, daß die Bänder oder Fasern der geschichteten Verstärkung mit einem warmaushärtenden oder thermoplastischen Harz getränkt werden.

10. Verfahren nach einem der Ansprüche 1 bis 9, dadurch gekennzeichnet, daß der die geschichtete Verstärkung bildende Werkstoff aus der Gruppe ausgewählt ist, die aus den Kohlenstoff-, Silizium-, Bor-, Aluminiumoxidfasern oder dgl. besteht.

11. Verfahren nach einem der Ansprüche 1 bis 7, dadurch gekennzeichnet, daß, wenn die innere Struktur aus rostfreiem Stahl besteht, die geschichtete Verstärkung durch Wickeln von mit einem Epoxidharz imprägnierten Kohlenstoffasern erhalten wird.

12. Hochdruckbehälter (1), der eine zylindrische Wand (2) umfaßt, die an ihren Enden durch eine Bodenogive (3) und eine Ogive (5) mit Hals (6) geschlossen ist, und eine innere metallische Struktur (1A) aufweist, die ein zylindrisches Rohr (2A, 2'A) mit dünner Wand umfaßt, die mit einer Bodenkalotte (3A) und mit einer Kalotte (5A, 5'A) mit Hals (6A) durch mindestens eine Verbindungszone verbunden ist, die durch Elektronenstrahlschweißen geschweißte Enden (13, 15) umfaßt, die zum zylindrischen Rohr mit dünner Wand bzw. zu der einen oder der anderen der Kalotten gehört, wobei diese metallische Struktur aus einem korrosionsbeständigen, schweißbaren Werkstoff hoher mechanischer Zug- und Ermüdungsfestigkeit besteht, und um die Gesamtheit dieser inneren metallischen Struktur herum eine Verstärkung (1B) aufweist, die von durch Faser- bzw. Fadenwicklungen gewickelten Fasern oder Bändern gebildet ist, dadurch gekennzeichnet, daß die verschweißten Enden (13, 15) radial überlagert und ineinandergesteckt sind und daß die die auf der Gesamtheit der inneren Struktur geformte Verstärkung (1B) geschichtet ist, wobei die Fasern oder Bänder, die getränkt sind, ein Vielzahl von Schichten mit Wicklungswinkeln bezüglich der Längsachse des Rohrs bilden, die von einer Schicht zur anderen verschieden sind.

13. Behälter nach Anspruch 12, dadurch gekennzeichnet, daß der Wicklungswinkel 10° bis 90° beträgt.

14. Hochdruckbehälter nach Anspruch 12 oder Anspruch 13, dadurch gekennzeichnet, daß das zylindrische metallische Rohr in einem durch Fließformen erhaltenen kaltverformten Zustand ist.

15. Hochdruckbehälter nach einem der Ansprüche 12 bis 14, dadurch gekennzeichnet, daß die innere Struktur ein Teil umfaßt, das die eine (5A) der Kalotten und das zylindrisch Rohr (2A) bildet und mit der anderen Kalotte (3A) durch eine Elektronenstrahlschweißzone verbunden ist, die einen Absatz aufweist, der in dieser anderen Kalotte ausgespart ist und in den das freie Ende des Rohrs eintritt.

16. Hochdruckbehälter nach Anspruch 15, dadurch gekennzeichnet, daß dieses Teil gleichzeitig das zylindrische Rohr und die Halskalotte bildet.

17. Hochdruckbehälter nach einem der Ansprüche 12 bis 14, dadurch gekennzeichnet, daß das zylindrische Rohre mit jeder der Kalotten durch eine Elektronenstrahlschweißzone verbunden ist, wobei jede dieser Kalotten einen Absatz aufweist, in den eines der Enden des Rohrs eintritt.

18. Hochdruckbehälter nach einem der Ansprüche 12 bis 17, dadurch gekennzeichnet, daß der die innere Struktur bildende metallische Werkstoff ein rostfreier martensitischer oder hinsichtlich der Korrosionsbeständigkeit gleichwertiger Stahl ist.

19. Hochdruckbehälter nach einem der Ansprüche 12 bis 18, dadurch gekennzeichnet, daß die Fasern der Bänder der geschichteten Verstärkung in eine Verbindungsgrundmasse aus warmhärtendem oder thermoplastischem Harz eingebettet sind.

20. Hochdruckbehälter nach einem der Ansprüche 12 bis 19, dadurch gekennzeichnet, daß der die geschichtete Verstärkung bildende Werkstoff aus der Gruppe ausgewählt ist, die aus den Kohlenstoff-, Silizium-, Bor-, Aluminiumoxidfasern o.dgl. besteht.

21. Hochdruckbehälter nach einem der Ansprüche 12 bis 20, dadurch gekennzeichnet, daß, wenn die innere Struktur aus rostfreiem Stahl besteht, die geschichtete Verstärkung durch Wicklung von mit einem Epoxidharz getränkten Kohlenstoffasern gebildet ist.
